# EUROPEAN PATENT APPLICATION

(11) **EP 4 614 762 A1**
(43) Date of publication of application: **10.09.2025**
(21) Application number: 24820524.7
(22) Date of filing: 02.10.2024
(51) Int. Cl.: H02J 13/00, H02J 3/14, F24H 1/18, F24H 4/02, F24H 9/25, F24H 15/269, F24H 15/296, F24H 15/395, F24H 15/414

(54) **DEVICE CONTROL SYSTEM**

(30) Priority: 18.01.2024 JP 2024006029
(71) Applicant: DAIKIN INDUSTRIES, LTD., Osaka-Shi, Osaka 530-0001 (JP)
(72) Inventor: NOBORITATE, Wataru, Osaka-shi, Osaka 530-0001 (JP); OGAWA, Kouhei, Osaka-shi, Osaka 530-0001 (JP)
(74) Representative: Conti, Marco
(86) International application number: PCT/JP2024/035184
(87) International publication number: WO 2025/154331

(57) **Abstract**

An aggregator or a user cannot find a difference between power consumption of a device according to a DR request and power consumption of the device in a case where the DR request is not received, and thus problematically fails to determine incentive appropriateness. A device control system includes a hot water supply apparatus (100) and a server (200). The server (200) controls the hot water supply apparatus (100) in accordance with a DR request. The server (200) controls the hot water supply apparatus (100) with a first operation setting during a first period set in accordance with the DR request. The server (200) outputs first information based on operation data (D1) of the hot water supply apparatus (100). The first information includes a difference between power consumption of the hot water supply apparatus (100) in a case where the hot water supply apparatus (100) is controlled with the first operation setting during the first period and predicted power consumption of the hot water supply apparatus (100) in a case where the hot water supply apparatus (100) is controlled with a second operation setting during the first period. The second operation setting corresponds to an operation setting for a case where the DR request is not received.

## Description

### TECHNICAL FIELD

The present disclosure relates to a device control system.

### BACKGROUND ART

According to a known system disclosed in Patent Literature 1 (JP 2018-170925 A), a user adjusts power consumption in a commercial power grid of a device in accordance with a demand response request from an aggregator and receives incentive from the aggregator in accordance with an adjusted quantity.

### SUMMARY OF THE INVENTION

### <Technical Problem>

According to Patent Literature 1, the aggregator or the user cannot find a difference between power consumption of the device according to the demand response request and power consumption of the device in a case where the demand response request is not received, and thus fails to determine incentive appropriateness.

### <Solution to Problem>

A device control system according to a first aspect includes a single or a plurality of devices, and a server. The server includes a control unit. The control unit controls the device in accordance with a demand response request. The control unit receives the request from an aggregator. The control unit controls the device with a first operation setting during a first period. The first period is set in accordance with the request. The first period is provided for adjustment of power consumption by the device. The control unit outputs first information based on operation data of the device acquired from the device. The first information includes a difference between first power consumption and second power consumption. The first power consumption corresponds to power consumption of the device in a case where the device is controlled with the first operation setting during the first period. The second power consumption corresponds to predicted power consumption of the device in a case where the device is controlled with a second operation setting during the first period. The second operation setting corresponds to an operation setting for a case where the control unit does not receive the request.

In the device control system according to the first aspect, the control unit outputs the first information based on the operation data of the device acquired from the device. The first information includes the difference between the first power consumption and the second power consumption. The first power consumption corresponds to power consumption of the device in the case where the device is controlled with the first operation setting during the first period. The second power consumption corresponds to predicted power consumption of the device in the case where the device is controlled with the second operation setting during the first period. The second operation setting corresponds to an operation setting for the case where the control unit does not receive the request. The device control system can thus output to the aggregator or a user the difference between the first power consumption of the device according to the demand response request and the second power consumption of the device in the case where the demand response request is not received. As a result, the aggregator or the user can find the difference between the first power consumption and the second power consumption to determine incentive appropriateness.

A device control system according to a second aspect is the device control system according to the first aspect, in which the request is a second request. The second request corresponds to a request to decrease power consumption of the device during the first period in comparison to the case where the control unit does not receive the request. The first operation setting is smaller in power consumption of the device during the first period than the second operation setting. The difference is a decreased quantity of power consumption of the device during the first period in comparison to the case where the control unit does not receive the request.

A device control system according to a third aspect is the device control system according to the first aspect, in which the request is a first request. The first request corresponds to a request to increase power consumption of the device during the first period in comparison to the case where the control unit does not receive the request. The first operation setting is larger in power consumption of the device during the first period than the second operation setting. The difference is an increased quantity of power consumption of the device during the first period in comparison to the case where the control unit does not receive the request.

A device control system according to a fourth aspect is the device control system according to any one of the first to third aspects, in which the first information further includes the second power consumption.

The device control system according to the fourth aspect is thus configured to provide the aggregator or the user with additional information for determination of incentive appropriateness.

A device control system according to a fifth aspect is the device control system according to any one of the first to fourth aspects, in which the first information further includes setting details of the first operation setting and whether or not the first operation setting is executed.

The device control system according to the fifth aspect is thus configured to provide the aggregator or the user with additional information for determination of incentive appropriateness.

A device control system according to a sixth aspect is the device control system according to any one of the first to fifth aspects, in which the control unit outputs the first information for each of the plurality of devices.

A device control system according to a seventh aspect is the device control system according to the sixth aspect, in which the control unit determines setting details of the first operation setting for each of the plurality of devices.

A device control system according to an eighth aspect is the device control system according to any one of the first to seventh aspects, in which the first period is set each day. The control unit outputs the first information each day.

A device control system according to a ninth aspect is the device control system according to any one of the first to eighth aspects, in which the request is a second request. The second request corresponds to a request to decrease power consumption of the device in comparison to the case where the control unit does not receive the request. A first operation time as an operation time with the first operation setting during the first period is shorter than a second operation time as an operation time with the second operation setting during the first period.

A device control system according to a tenth aspect is the device control system according to the ninth aspect, in which the first information further includes a difference between the first operation time and the second operation time.

A device control system according to an eleventh aspect is the device control system according to any one of the first to tenth aspects, in which the request is a second request. The second request corresponds to a request to decrease power consumption of the device in comparison to the case where the control unit does not receive the request. An operation capacity of the first operation setting during the first period is lower than an operation capacity of the second operation setting during the first period.

A device control system according to a twelfth aspect is the device control system according to any one of the first to eleventh aspects, in which the control unit outputs the first information to the aggregator.

A device control system according to a thirteenth aspect is the device control system according to any one of the first to twelfth aspects, and the device control system further includes a display unit. The control unit outputs the first information to the display unit.

### BRIEF DESCRIPTION OF THE DRAWINGS

FIG. 1 is a schematic configuration diagram of a device control system.
FIG. 2 is a schematic configuration diagram of a hot water supply apparatus.
FIG. 3 is a functional block diagram of the hot water supply apparatus.
FIG. 4 is a functional block diagram of a server.
FIG. 5 is a graph indicating setting details of a second operation setting of the hot water supply apparatus.
FIG. 6 is a graph indicating setting details of a first operation setting in a case where a DR request relates to an increasing DR request.
FIG. 7 is a graph indicating setting details of the first operation setting in a case where the DR request relates to a decreasing DR request.
FIG. 8 is an explanatory flowchart of processing by the device control system.
FIG. 9 is a graph indicating setting details of the first operation setting in a case where the DR request relates to the decreasing DR request according to modification example 1D.

### DESCRIPTION OF EMBODIMENTS

### (1) Entire configuration

A device control system 1 controls a single or a plurality of devices in accordance with a demand response request (hereinafter, occasionally referred to as a DR request).

Demand response means adjustment, by a user (consumer) to be supplied with electric power in a commercial power grid, of power consumption in the commercial power grid in accordance with a request from an aggregator 90 such as an electric power company as a supplier of the electric power in the commercial power grid. The aggregator 90 pays the user reward as a compensation for demand response, in accordance with an adjusted quantity of power consumption in the commercial power grid.

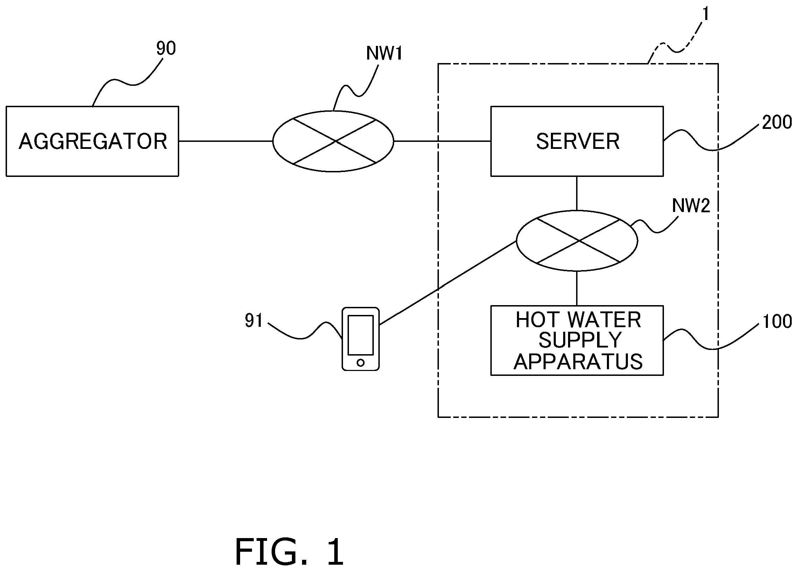

FIG. 1 is a schematic configuration diagram of the device control system 1. As depicted in FIG. 1, the device control system 1 includes a hot water supply apparatus 100 (device), and a server 200. The hot water supply apparatus 100 and the server 200 are communicably connected to each other via a network NW2. The server 200 receives, from the aggregator 90 via a network NW1 such as the Internet, a DR request to the hot water supply apparatus 100 used by the user. The server 200 transmits the DR request thus received to the hot water supply apparatus 100 via the network NW2, and controls the hot water supply apparatus 100 in accordance with the DR request thus received. The server 200 may further transmit the DR request thus received to a mobile information terminal such as a smartphone 91 of the user via the network NW2, to notify the user of the DR request.

### (2) Detailed configurations

### (2-1) Hot water supply apparatus

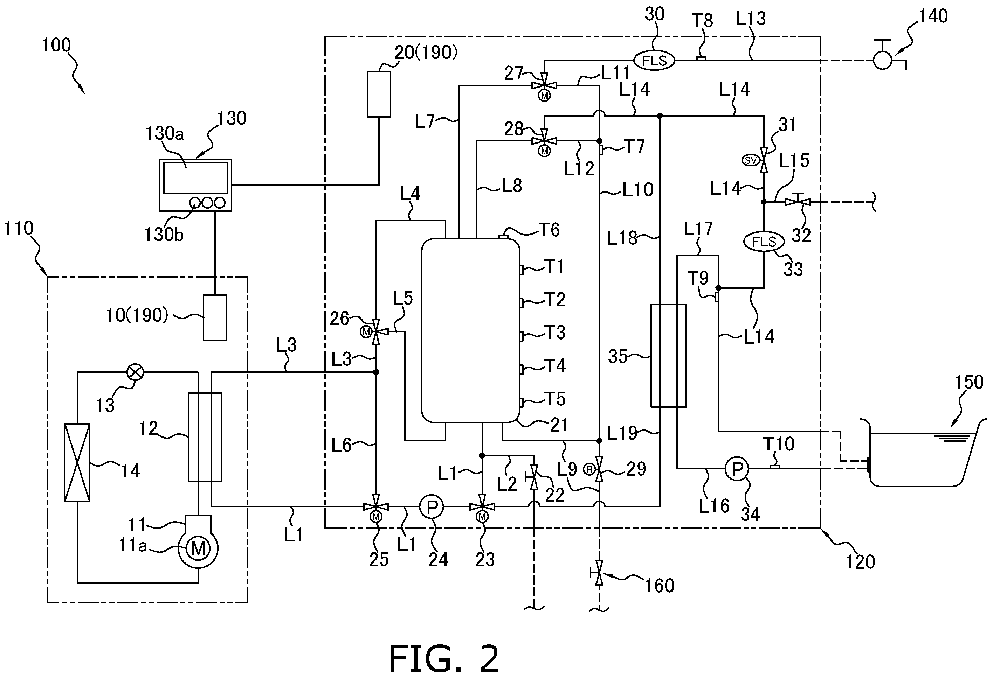

FIG. 2 is a schematic configuration diagram of the hot water supply apparatus 100. As depicted in FIG. 2, the hot water supply apparatus 100 principally includes a heat pump unit 110, a hot water reservoir unit 120, a remote controller 130, and a control unit 190. The hot water reservoir unit 120 is connected to a hot water supply unit 140, a bathtub 150, and a water shut off valve 160.

The heat pump unit 110 heats hot or cold water supplied from the hot water reservoir unit 120 and supplies the hot water reservoir unit 120 with the hot or cold water thus heated. The hot water reservoir unit 120 reserves the hot or cold water thus heated and supplied from the heat pump unit 110, mixes the hot or cold water being reserved and water supplied from the water shut off valve 160, and supplies the hot water supply unit 140 and the bathtub 150 with the water thus mixed. Examples of the hot water supply unit 140 include a faucet and a shower. The water shut off valve 160 is connected to an external water supply source such as a water supply. The water shut off valve 160 is operated to supply the hot water reservoir unit 120 with water.

Herein, "hot or cold water" means at least one of hot water or cold water. Accordingly, both water to be heated by the heat pump unit 110 and water having been heated by the heat pump unit 110 will be called hot or cold water.

### (2-1-1) Heat pump unit

The heat pump unit 110 principally includes a compressor 11, a water heat exchanger 12, an expansion valve 13, and an air heat exchanger 14. The compressor 11, the water heat exchanger 12, the expansion valve 13, and the air heat exchanger 14 are connected into a ring shape via refrigerant pipes to constitute a heat pump cycle. The compressor 11 has a discharge side connected to the water heat exchanger 12, and a suction side connected to the air heat exchanger 14. The expansion valve 13 has one end connected to the water heat exchanger 12, and the other end connected to the air heat exchanger 14. The heat pump unit 110 further includes a first control device 10.

The heat pump cycle allows circulation of a refrigerant having critical temperature higher than temperature of heated hot or cold water supplied from the heat pump unit 110 to the hot water reservoir unit 120. The critical temperature of the refrigerant is preferred to be higher by 10°C or more than the temperature of the heated hot or cold water. Examples of the refrigerant include R32 (critical temperature 78.1°C), HFO-1234yf (critical temperature 95.0°C), and R410 (critical temperature 71.4°C).

The compressor 11 includes a compression mechanism configured to compress a refrigerant when a motor 11a is driven. The refrigerant compressed by the compressor 11 is sent to the water heat exchanger 12. The heat pump unit 110 has a capacity adjustable through control of an operating frequency of the motor 11a.

The water heat exchanger 12 causes heat exchange between the refrigerant compressed by the compressor 11 and having high temperature and hot or cold water supplied from the hot water reservoir unit 120 to heat the hot or cold water. Examples of the water heat exchanger 12 include a double pipe heat exchanger including an outer pipe and an inner pipe inserted to the outer pipe. The examples of the water heat exchanger 12 may further include a plate heat exchanger. Examples of the capacity of the heat pump unit 110 include a quantity of heat provided by the water heat exchanger 12 to hot or cold water supplied from the hot water reservoir unit 120 per unit time.

The expansion valve 13 decompresses the refrigerant having passed through the water heat exchanger 12 and having exchanged heat. Examples of the expansion valve 13 include an electric expansion valve. The examples of the expansion valve 13 may further include a capillary tube.

The air heat exchanger 14 causes heat exchange between the refrigerant having passed through the expansion valve 13 and having been decompressed and outdoor air to heat the refrigerant. The air heat exchanger 14 is supplied with outdoor air from an outdoor air fan or the like. The refrigerant having passed through the air heat exchanger 14 and having exchanged heat is sent to the compressor 11.

### (2-1-2) Hot water reservoir unit

The hot water reservoir unit 120 principally includes a hot water reservoir tank 21, a first drain valve 22, a water inlet valve 23, a boiling pump 24, a bypass valve 25, a boiling valve 26, a first mixing valve 27, a second mixing valve 28, a decompression valve 29, a first flow rate sensor 30, a hot water filling electromagnetic valve 31, a second drain valve 32, a second flow rate sensor 33, a reheat pump 34, and a reheat heat exchanger 35. These elements are connected by pipes L1 to L19 for flows of hot or cold water. The hot water reservoir tank 21 and the pipes L10, L13, L14, and L16 are provided with temperature sensors T1 to T10. The hot water reservoir unit 120 further includes a second control device 20.

The hot water reservoir tank 21 reserves hot or cold water. The hot water reservoir tank 21 is provided with six temperature sensors T1 to T6. The six temperature sensors T1 to T6 include a first hot water quantity temperature sensor T1, a second hot water quantity temperature sensor T2, a third hot water quantity temperature sensor T3, a fourth hot water quantity temperature sensor T4, a fifth hot water quantity temperature sensor T5, and an upper temperature sensor T6. The upper temperature sensor T6 is provided near an upper end surface of the hot water reservoir tank 21. The first to fifth hot water quantity temperature sensors T1 to T5 are disposed on a side surface of the hot water reservoir tank 21 at intervals from an upper side to a lower side.

Water has density changed in accordance with temperature. Hot or cold water reserved in the hot water reservoir tank 21 thus forms layers having higher temperature on an upper side and having lower temperature on a lower side. A quantity of hot or cold water (hot water reserved quantity) in the hot water reservoir tank 21 can thus be acquired by detecting temperature distribution in a vertical direction of the hot or cold water in the hot water reservoir tank 21 based on output signals from the temperature sensors T1 to T6. The number of the temperature sensors provided at the hot water reservoir tank 21 for acquisition of a hot water reserved quantity in the hot water reservoir tank 21 may alternatively be any appropriate number other than six.

A water inlet pipe L1 has one end connected to a lower end surface of the hot water reservoir tank 21, and the other end connected to an inlet side of the water heat exchanger 12 in the heat pump unit 110. The water inlet pipe L1 is provided with the water inlet valve 23, the boiling pump 24, and the bypass valve 25 from the hot water reservoir tank 21 toward the water heat exchanger 12. Each of the water inlet valve 23 and the bypass valve 25 is an electric three-way valve.

At a point between the hot water reservoir tank 21 and the water inlet valve 23, a first drain pipe L2 branches from the water inlet pipe L1. The first drain pipe L2 is provided with the first drain valve 22. The first drain pipe L2 is connected to a drain pipe at a point outside the hot water reservoir unit 120. The first drain valve 22 is operated to, for example, externally drain hot or cold water in the hot water reservoir tank 21.

A hot water outlet pipe L3 has one end connected to an outlet side of the water heat exchanger 12 in the heat pump unit 110, and the other end connected to the boiling valve 26. The boiling valve 26 is an electric three-way valve.

A first return pipe L4 has one end connected to the boiling valve 26, and the other end connected to the upper end surface of the hot water reservoir tank 21.

A second return pipe L5 has one end connected to the boiling valve 26, and the other end connected to the lower end surface of the hot water reservoir tank 21.

A bypass pipe L6 has one end connected to the bypass valve 25, and the other end connected to the hot water outlet pipe L3.

A first boiling pipe L7 has one end connected to the upper end surface of the hot water reservoir tank 21, and the other end connected to the first mixing valve 27. The first mixing valve 27 is an electric three-way valve.

A second boiling pipe L8 has one end connected to the upper end surface of the hot water reservoir tank 21, and the other end connected to the second mixing valve 28. The second mixing valve 28 is an electric three-way valve.

A tank water supply pipe L9 has one end connected to the water shut off valve 160 at a point outside the hot water reservoir unit 120, and the other end connected to the lower end surface of the hot water reservoir tank 21. The tank water supply pipe L9 is provided with the decompression valve 29. The decompression valve 29 is operated to adjust pressure (water supply pressure) of water supplied to the hot water reservoir unit 120 via the water shut off valve 160.

At a point between the decompression valve 29 and the hot water reservoir tank 21, a branching water supply pipe L10 branches from the tank water supply pipe L9. The branching water supply pipe L10 branches into a first mixed water pipe L11 and a second mixed water pipe L12. The first mixed water pipe L11 is connected to the first mixing valve 27. The second mixed water pipe L12 is connected to the second mixing valve 28. The branching water supply pipe L10 is provided with a mixed water temperature sensor T7. The mixed water temperature sensor T7 detects temperature of hot or cold water flowing in the branching water supply pipe L10.

A first hot water supply pipe L13 has one end connected to the first mixing valve 27, and the other end connected to the hot water supply unit 140. The first hot water supply pipe L13 is provided with the first flow rate sensor 30. The first flow rate sensor 30 detects a flow rate of hot or cold water in the first hot water supply pipe L13. At a point between the first flow rate sensor 30 and the hot water supply unit 140, the first hot water supply pipe L13 is provided with a first hot water supply temperature sensor T8. The first hot water supply temperature sensor T8 detects temperature of hot or cold water flowing in the first hot water supply pipe L13.

A second hot water supply pipe L14 has one end connected to the second mixing valve 28, and the other end connected to the bathtub 150. The second hot water supply pipe L14 is provided with the hot water filling electromagnetic valve 31 and the second flow rate sensor 33 from the second mixing valve 28 toward the bathtub 150. The second flow rate sensor 33 detects a flow rate of hot or cold water in the second hot water supply pipe L14.

At a point between the hot water filling electromagnetic valve 31 and the second flow rate sensor 33, a second drain pipe L15 branches from the second hot water supply pipe L14. The second drain pipe L15 is provided with the second drain valve 32. The second drain pipe L15 is connected to a drain pipe at a point outside the hot water reservoir unit 120. The second drain valve 32 is operated to, for example, externally drain part of hot or cold water flowing in the second hot water supply pipe L14 in order to adjust a quantity of hot or cold water flowing in the second hot water supply pipe L14.

A first bathtub return pipe L16 has one end connected to the bathtub 150, and the other end connected to an inlet side of the reheat heat exchanger 35. The first bathtub return pipe L16 is provided with the reheat pump 34. At a point between the bathtub 150 and the reheat pump 34, the first bathtub return pipe L16 is provided with a bathtub return temperature sensor T10. The bathtub return temperature sensor T10 detects temperature of hot or cold water flowing in the first bathtub return pipe L16.

A second bathtub return pipe L17 has one end connected to an outlet side of the reheat heat exchanger 35, and the other end connected to the second hot water supply pipe L14 at a point between the second flow rate sensor 33 and the bathtub 150. At a point between a connection point of the second bathtub return pipe L17 with the second hot water supply pipe L14 and the bathtub 150, the second hot water supply pipe L14 is provided with a second hot water supply temperature sensor T9. The second hot water supply temperature sensor T9 detects temperature of hot or cold water flowing in the second hot water supply pipe L14.

At a point between the second mixing valve 28 and the hot water filling electromagnetic valve 31, a first reheat pipe L18 branches from the second hot water supply pipe L14. The first reheat pipe L18 is connected to the inlet side of the reheat heat exchanger 35.

A second reheat pipe L19 has one end connected to the outlet side of the reheat heat exchanger 35, and the other end connected to the water inlet valve 23.

### (2-1-3) Remote controller

The remote controller 130 is a user interface for control of the hot water supply apparatus 100. The remote controller 130 is installed in a kitchen, a bathroom, or the like. As depicted in FIG. 2, the remote controller 130 is connected to the first control device 10 and the second control device 20 so as to be interactively data communicable by wireless communication or wired communication. A signal or the like commanding operation of the hot water supply apparatus 100 are input from the remote controller 130 to each of the first control device 10 and the second control device 20 by wireless communication or wired communication. Examples of the user interface for the hot water supply apparatus 100 may include, in addition to the remote controller 130, a mobile information terminal such as the smartphone 91.

The remote controller 130 includes a display unit 130a and an operation unit 130b. Examples of the display unit 130a include a liquid crystal display and an organic EL display.

The display unit 130a displays information on a state of the hot water supply apparatus 100, information on a setting of the hot water supply apparatus 100, and the like. The display unit 130a displays a set value of temperature of hot or cold water (hot water supply temperature) supplied to the hot water supply unit 140 and the bathtub 150, a hot water reserved quantity in the hot water reservoir tank 21, and the like. The display unit 130a displays a DR request received from the server 200, first information, which is to be described later, received from the server 200, and the like.

The operation unit 130b includes a button, a dial, a key, and the like to be operated by the user of the hot water supply apparatus 100. The user of the hot water supply apparatus 100 operates the operation unit 130b to input information on the set value of hot water supply temperature, and the like. Examples of the display unit 130a may include a touch screen also functioning as the operation unit 130b.

The remote controller 130 may further include a speaker, a microphone, and the like. In this case, the remote controller 130 may notify of the information displayed on the display unit 130a by means of the speaker, and may acquire the information input through the operation unit 130b by means of the microphone.

### (2-1-4) Control unit

The control unit 190 is principally constituted by the first control device 10 in the heat pump unit 110 and the second control device 20 in the hot water reservoir unit 120. Each of the first control device 10 and the second control device 20 is typically constituted by a microcomputer including a control arithmetic device and a storage device, and an input-output circuit. The control arithmetic device is a processor such as a CPU or a GPU. The control arithmetic device reads a control program stored in the storage device, and controls operation of the hot water supply apparatus 100 in accordance with the control program. The control arithmetic device is further configured to write an arithmetic result to the storage device and read information stored in the storage device in accordance with the control program.

The control unit 190 is not limited to the above in terms of its configuration. For example, the first control device 10 and the second control device 20 may interactively communicate to operate cooperatively. Instead of including the first control device 10 and the second control device 20, the hot water supply apparatus 100 may include a device having functions of both the first control device 10 and the second control device 20 and provided in any one of the heat pump unit 110 and the hot water reservoir unit 120. Such a device may be disposed outside the hot water supply apparatus 100 and may be connected to the heat pump unit 110 and the hot water reservoir unit 120 via a network.

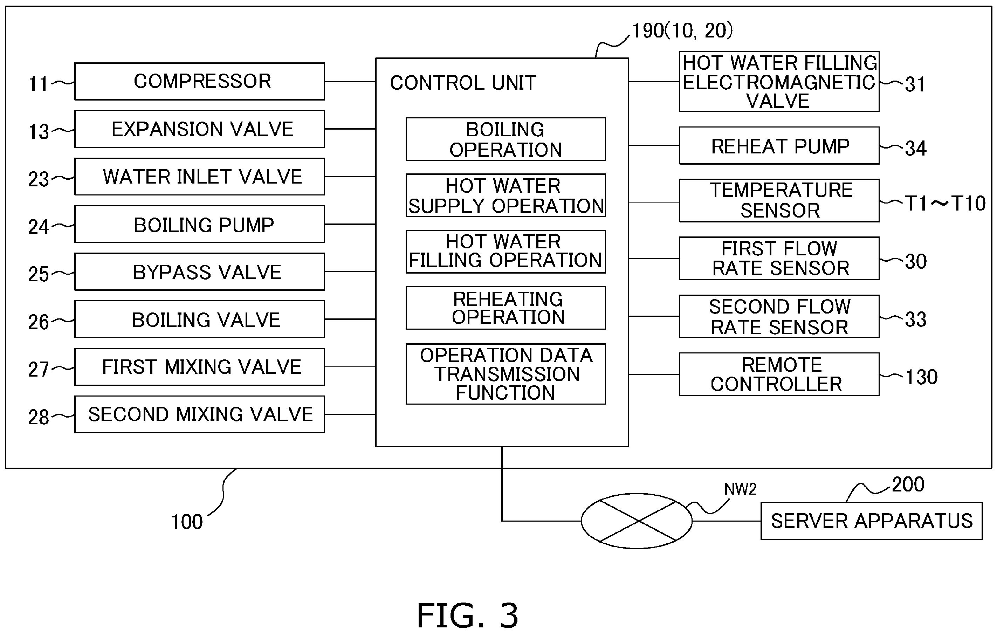

FIG. 3 is a functional block diagram of the hot water supply apparatus 100. As depicted in FIG. 3, the control unit 190 controls the compressor 11, the expansion valve 13, the water inlet valve 23, the boiling pump 24, the bypass valve 25, the boiling valve 26, the first mixing valve 27, the second mixing valve 28, the hot water filling electromagnetic valve 31, the reheat pump 34, and the like based on signals from the temperature sensors T1 to T10, the first flow rate sensor 30, and the second flow rate sensor 33. The control unit 190 is communicably connected to the server 200.

The control unit 190 principally executes boiling operation, hot water supply operation, hot water filling operation, and reheating operation. Furthermore, the control unit 190 principally has an operation data transmission function.

### (2-1-4-1) Boiling operation

Boiling operation includes heating hot or cold water in the hot water reservoir tank 21 by means of the heat pump unit 110. During boiling operation, the boiling pump 24 is driven to guide hot or cold water in the hot water reservoir tank 21 into the water heat exchanger 12 through the water inlet pipe L1 so as to be heated. The hot or cold water heated in the water heat exchanger 12 is returned into the hot water reservoir tank 21 through the hot water outlet pipe L3, the first return pipe L4, and the second return pipe L5. In this manner, boiling operation includes heating, in the water heat exchanger 12, hot or cold water in the hot water reservoir tank 21 while circulating the hot or cold water through the water inlet pipe L1, the hot water outlet pipe L3, the first return pipe L4, and the second return pipe L5.

The control unit 190 executes boiling operation by controlling the compressor 11, the expansion valve 13, the water inlet valve 23, the boiling pump 24, the bypass valve 25, and the boiling valve 26 based on an operation setting received from the server 200. The control unit 190 controls the operating frequency of the motor 11a for the compressor 11 and an opening degree of the expansion valve 13 to adjust a capacity of the heat pump unit 110, temperature of hot or cold water (hot water output temperature) heated in the water heat exchanger 12, and the like. The control unit 190 controls a number of revolutions of the boiling pump 24 to adjust hot water output temperature, a hot water reserved quantity in the hot water reservoir tank 21, a flow rate of hot or cold water (reserved flow rate) supplied into the hot water reservoir tank 21, and the like.

During ordinary boiling operation of circulating hot or cold water in the hot water reservoir tank 21, the control unit 190 controls the water inlet valve 23 to prevent the water inlet pipe L1 from communicating with the second reheat pipe L19, and controls the bypass valve 25 to prevent the water inlet pipe L1 from communicating with the bypass pipe L6. As to be described later, the control unit 190 controls the water inlet valve 23 for execution of reheating operation.

The control unit 190 is configured to control the bypass valve 25 to switch between a state where hot or cold water flowing in the water inlet pipe L1 passes through the water heat exchanger 12 and is supplied into the hot water outlet pipe L3 and a state where hot or cold water flowing in the water inlet pipe L1 bypasses the water heat exchanger 12 and is supplied into the hot water outlet pipe L3. In the state of bypassing the water heat exchanger 12, the water inlet pipe L1 communicates with the bypass pipe L6 and hot or cold water in the hot water reservoir tank 21 circulates without being heated in the water heat exchanger 12.

The control unit 190 is configured to control the boiling valve 26 to switch between a state where hot or cold water is supplied from the water heat exchanger 12 into the hot water reservoir tank 21 through the first return pipe L4, and a state where hot or cold water is supplied from the water heat exchanger 12 into the hot water reservoir tank 21 through the second return pipe L5.

The control unit 190 may acquire hot water output temperature, a hot water reserved quantity, and a reserved flow rate based on the operating frequency of the motor 11a for the compressor 11, the opening degree of the expansion valve 13, the number of revolutions of the boiling pump 24, states of the bypass valve 25 and the boiling valve 26, output signals from the temperature sensors T1 to T6 at the hot water reservoir tank 21, and the like.

The control unit 190 may feedback control the operating frequency of the motor 11a for the compressor 11, the opening degree of the expansion valve 13, the number of revolutions of the boiling pump 24, and the states of the bypass valve 25 and the boiling valve 26 such that the hot water output temperature, the hot water reserved quantity, and the reserved flow rate reach predetermined target values.

The hot water supply apparatus 100 executes nighttime boiling operation and daytime boiling operation. Nighttime boiling operation is boiling operation executed during at least part of a night time zone. Daytime boiling operation is boiling operation executed during at least part of a day time zone. The day time zone corresponds to a time zone other than the night time zone. The present embodiment assumes that the night time zone is a time zone from 23:00 to 7: 00 on a following day and that the day time zone is a time zone from 7: 00 to 23: 00. In the present embodiment, nighttime boiling operation and daytime boiling operation are executed based on an operation setting received from the server 200.

In the present embodiment, the hot water supply apparatus 100 executes boiling operation with use of the electric power in the commercial power grid.

### (2-1-4-2) Hot water supply operation

Hot water supply operation includes outputting hot or cold water in the hot water reservoir tank 21 from the hot water supply unit 140. In a case where the hot water supply unit 140 is a faucet, during hot water supply operation, the faucet is opened to supply external water from a lower part of the hot water reservoir tank 21 into the hot water reservoir tank 21 through the tank water supply pipe L9 due to water supply pressure. Accordingly, hot or cold water having high temperature and reserved in the hot water reservoir tank 21 is pushed out of an upper part of the hot water reservoir tank 21 through the first boiling pipe L7.

Subsequently, the hot or cold water having high temperature is supplied from the hot water reservoir tank 21 to the first mixing valve 27 through the first boiling pipe L7, and the external water is supplied to the first mixing valve 27 through the tank water supply pipe L9, the branching water supply pipe L10, and the first mixed water pipe L11. At the first mixing valve 27, the hot or cold water having high temperature from the first boiling pipe L7 is mixed with the water from the first mixed water pipe L11. Hot or cold water thus obtained by mixing is output from the hot water supply unit 140 through the first hot water supply pipe L13.

When the user opens the hot water supply unit 140 and the first flow rate sensor 30 detects an increase in the flow rate of hot or cold water in the first hot water supply pipe L13, the control unit 190 starts hot water supply operation. During hot water supply operation, the control unit 190 controls the first mixing valve 27 in accordance with temperature of hot or cold water output from the hot water supply unit 140. The control unit 190 may adopt temperature detected by the first hot water supply temperature sensor T8 as the temperature of the hot or cold water output from the hot water supply unit 140.

The control unit 190 may feedback control a mixture ratio between hot or cold water having high temperature and water at the first mixing valve 27 based on output signals from the mixed water temperature sensor T7 and the first hot water supply temperature sensor T8, and the like, such that the temperature of the hot or cold water output from the hot water supply unit 140 reaches a predetermined target value.

### (2-1-4-3) Hot water filling operation

Hot water filling operation includes supplying the bathtub 150 with hot or cold water in the hot water reservoir tank 21. During hot water filling operation, the hot water filling electromagnetic valve 31 is opened to supply external water from the lower part the hot water reservoir tank 21 into the hot water reservoir tank 21 through the tank water supply pipe L9 due to water supply pressure. Accordingly, hot or cold water having high temperature and reserved in the hot water reservoir tank 21 is pushed out of the upper part of the hot water reservoir tank 21 through the second boiling pipe L8.

Subsequently, the hot or cold water having high temperature is supplied from the hot water reservoir tank 21 to the second mixing valve 28 through the second boiling pipe L8, and the external water is supplied to the second mixing valve 28 through the tank water supply pipe L9, the branching water supply pipe L10, and the second mixed water pipe L12. At the second mixing valve 28, the hot or cold water having high temperature from the second boiling pipe L8 is mixed with the water from the second mixed water pipe L12. Hot or cold water thus obtained by mixing is supplied into the bathtub 150 through the second hot water supply pipe L14.

The control unit 190 opens the hot water filling electromagnetic valve 31 upon receipt of a start signal for hot water filling operation by user operation of the remote controller 130, and starts hot water filling operation when the second flow rate sensor 33 detects an increase in the flow rate of hot or cold water in the second hot water supply pipe L14. During hot water filling operation, the control unit 190 controls the second mixing valve 28 in accordance with temperature of hot or cold water supplied into the bathtub 150. The control unit 190 may adopt temperature detected by the second hot water supply temperature sensor T9 as the temperature of the hot or cold water supplied into the bathtub 150.

The control unit 190 may feedback control a mixture ratio between hot or cold water having high temperature and water at the second mixing valve 28 based on output signals from the mixed water temperature sensor T7 and the second hot water supply temperature sensor T9, and the like, such that the temperature of the hot or cold water supplied into the bathtub 150 reaches a predetermined target value.

During hot water filling operation, the control unit 190 may close the hot water filling electromagnetic valve 31 to end hot water filling operation upon receipt of an end signal for hot water filling operation by user operation of the remote controller 130 or when a water level in the bathtub 150 detected by a water level sensor (not depicted) provided at the bathtub 150 reaches a predetermined target value.

### (2-1-4-4) Reheating operation

Reheating operation includes heating, the reheat heat exchanger 35, hot or cold water in the bathtub 150 and returning the hot or cold water thus heated into the bathtub 150. When the reheat pump 34 is driven during reheating operation, part of the hot or cold water in the bathtub 150 is guided into the reheat heat exchanger 35 through the first bathtub return pipe L16 to be heated. The hot or cold water heated in the reheat heat exchanger 35 is returned into the bathtub 150 through the second bathtub return pipe L17 and the second hot water supply pipe L14. In this manner, reheating operation includes heating, in the reheat heat exchanger 35, hot or cold water in the bathtub 150 while circulating the hot or cold water through the first bathtub return pipe L16, the second bathtub return pipe L17, and the second hot water supply pipe L14.

The reheat heat exchanger 35 causes heat exchange between hot or cold water having high temperature and supplied from the hot water reservoir tank 21 through the second hot water supply pipe L14 and the first reheat pipe L18, and hot or cold water having low temperature and supplied from the bathtub 150 through the first bathtub return pipe L16. The reheat heat exchanger 35 accordingly heats the hot or cold water supplied from the bathtub 150 through the first bathtub return pipe L16. The hot or cold water having high temperature and supplied to the reheat heat exchanger 35 through the first reheat pipe L18 exchanges heat and is then supplied to the water inlet pipe L1 through the second reheat pipe L19 and via the water inlet valve 23. Examples of the reheat heat exchanger 35 may include a counterflow heat exchanger configured to cause heat exchange between hot or cold water having high temperature and hot or cold water having low temperature flowing in opposite directions.

Upon receipt of a start signal for reheating operation by user operation of the remote controller 130, the control unit 190 controls the water inlet valve 23 to cause the water inlet pipe L1 and the second reheat pipe L19 to communicate with each other, drives the boiling pump 24 and the reheat pump 34, and starts reheating operation. During reheating operation, the control unit 190 controls numbers of revolutions of the boiling pump 24 and the reheat pump 34 in accordance with temperature of the hot or cold water in the bathtub 150 and temperature of the hot or cold water returned from the reheat heat exchanger 35 into the bathtub 150. The control unit 190 may adopt temperature detected by the bathtub return temperature sensor T10 as the temperature of the hot or cold water in the bathtub 150, and temperature detected by the second hot water supply temperature sensor T9 as the temperature of the hot or cold water returned from the reheat heat exchanger 35 into the bathtub 150.

The control unit 190 may feedback control the numbers of revolutions of the boiling pump 24 and the reheat pump 34 based on output signals from the second hot water supply temperature sensor T9 and the bathtub return temperature sensor T10, and the like, such that the temperature of the hot or cold water in the bathtub 150 reaches a predetermined target value.

During reheating operation, the control unit 190 may control the water inlet valve 23 to prevent the second reheat pipe L19 from communicating with the water inlet pipe L1 and may stop the reheat pump 34 to end reheating operation upon receipt of an end signal for reheating operation by user operation of the remote controller 130 or when the temperature of the hot or cold water in the bathtub 150 reaches the predetermined target value.

### (2-1-4-5) Operation data transmission function

The control unit 190 periodically (e.g., every 30 seconds) transmits operation data D1 of the hot water supply apparatus 100 to the server 200.

The operation data D1 transmitted to the server 200 includes measurement values of the temperature sensors T1 to T10, a measurement value of the first flow rate sensor 30, a measurement value of the second flow rate sensor 33, the operating frequency of the motor 11a for the compressor 11, the opening degree of the expansion valve 13, a state of the water inlet valve 23, the number of revolutions of the boiling pump 24, the state of the bypass valve 25, the state of the boiling valve 26, an opening degree of the first mixing valve 27, an opening degree of the second mixing valve 28, a state of the hot water filling electromagnetic valve 31, the number of revolutions of the reheat pump 34, or the like.

### (2-2) Server

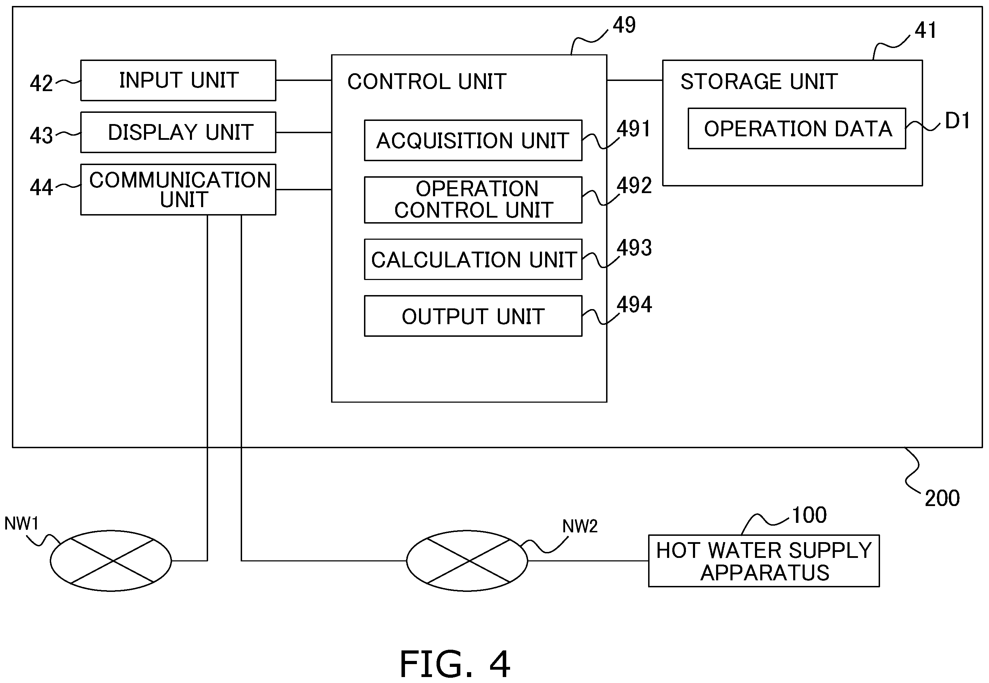

The server 200 is a computer disposed on a cloud. FIG. 4 is a functional block diagram of the server 200. As depicted in FIG. 4, the server 200 principally includes a storage unit 41, an input unit 42, a display unit 43, a communication unit 44, and a control unit 49.

The storage unit 41 is a storage device such as a RAM, a ROM, or an HDD. The storage unit 41 stores a program executed by the control unit 49, data necessary for execution of the program, and the like. The storage unit 41 particularly stores the operation data D1 transmitted from the hot water supply apparatus 100. The input unit 42 includes a keyboard and a mouse. Various commands to the server 200 and various information can be input with use of the input unit 42. The display unit 43 is a monitor. The display unit 43 can display various data and the like stored in the storage unit 41. The communication unit 44 is a network interface device configured to communicate with the aggregator 90, the hot water supply apparatus 100, and the like via the networks NW1 and NW2.

### (2-2-1) Control unit

Examples of the control unit 49 include a processor such as a CPU or a GPU. The control unit 49 reads to execute the program stored in the storage unit 41 so as to enable various functions of the server 200. The control unit 49 is further configured to write an arithmetic result to the storage unit 41 and read information stored in the storage unit 41 in accordance with the program.

As depicted in FIG. 4, the control unit 49 includes, as a functional block, an acquisition unit 491, an operation control unit 492, a calculation unit 493, and an output unit 494.

### (2-2-1-1) Acquisition unit

The acquisition unit 491 receives a DR request to the hot water supply apparatus 100 from the aggregator 90 via the network NW1. The DR request includes a first period. The first period is set in accordance with the DR request. The first period is provided for adjustment of power consumption by the hot water supply apparatus 100.

The DR request includes a first request and a second request.

The first request corresponds to a request to increase the power consumption of the hot water supply apparatus 100 during the first period in comparison to a case where the DR request is not received. The aggregator 90 issues the demand response first request to the server 200 before the first period while the electric power in the commercial power grid is predicted to be in excess. Hereinafter, the first request may occasionally be referred to as an increasing DR request.

The second request corresponds to a request to decrease the power consumption of the hot water supply apparatus 100 during the first period in comparison to the case where the DR request is not received. The aggregator 90 issues the demand response second request to the server 200 before the first period while the electric power in the commercial power grid is predicted to be tight. Hereinafter, the second request may occasionally be referred to as a decreasing DR request.

The present embodiment assumes that the server 200 receives the DR request immediately before the night time zone during boiling operation of the hot water supply apparatus 100. Furthermore, assume that the first period corresponds to a time zone from 11:00 to 15:00 in the day time zone subsequent to the night time zone.

The acquisition unit 491 periodically (e.g., every 30 minutes) acquires the operation data D1 from the hot water supply apparatus 100 via the network NW2.

### (2-2-1-2) Operation control unit

The operation control unit 492 transmits an operation setting of the hot water supply apparatus 100 to the hot water supply apparatus 100 so as to control the hot water supply apparatus 100. The operation setting of the hot water supply apparatus 100 according to the present embodiment corresponds to an operation setting for boiling operation of the hot water supply apparatus 100.

The operation setting includes a first operation setting and a second operation setting.

When the operation control unit 492 does not receive the DR request from the aggregator 90, the operation control unit 492 controls the hot water supply apparatus 100 with the second operation setting.

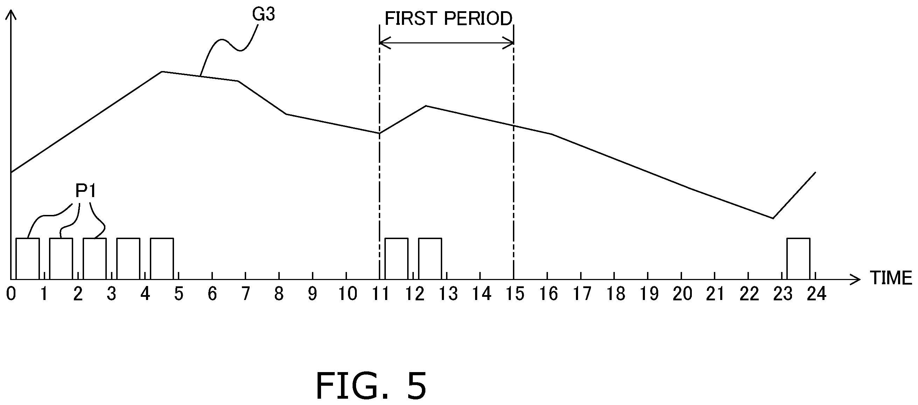

FIG. 5 is a graph indicating setting details of the second operation setting for boiling operation of the hot water supply apparatus 100. FIG. 5 includes bar indication on power consumption P1 and solid line indication G3 on a hot water reserved quantity in the hot water reservoir tank 21. As indicated in FIG. 5, with the second operation setting, nighttime boiling operation is executed from 23:00 to 5:00 on a following day, and daytime boiling operation is executed from 11:00 to 13:00.

When the operation control unit 492 receives the DR request from the aggregator 90, the operation control unit 492 determines setting details of the first operation setting of the hot water supply apparatus 100 in accordance with the DR request and controls the hot water supply apparatus 100 with the first operation setting. In other words, the operation control unit 492 controls the hot water supply apparatus 100 with the first operation setting during the first period.

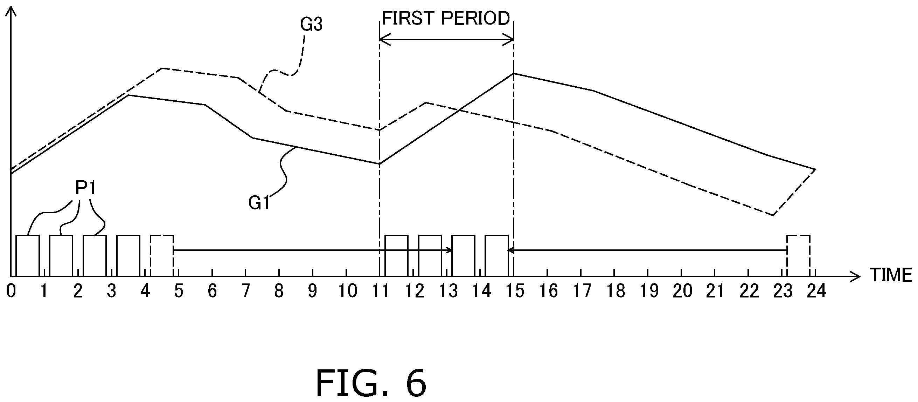

FIG. 6 is a graph indicating setting details of the first operation setting in a case where the DR request relates to the increasing DR request. As indicated in FIG. 6, with the first operation setting, nighttime boiling operation executed from 4:00 to 5:00 with the second operation setting is changed to daytime boiling operation executed from 13:00 to 14:00 and nighttime boiling operation executed from 23:00 to 24:00 with the second operation setting is changed to daytime boiling operation executed from 14:00 to 15:00 in order to increase the power consumption of the hot water supply apparatus 100 during the first period in comparison to the second operation setting. FIG. 6 includes solid line indication G1 indicating a hot water reserved quantity in the hot water reservoir tank 21 with the first operation setting, and broken line indication G3 indicating a hot water reserved quantity in the hot water reservoir tank 21 with the second operation setting. In this case, the first operation setting is larger in power consumption of the hot water supply apparatus 100 during the first period than the second operation setting.

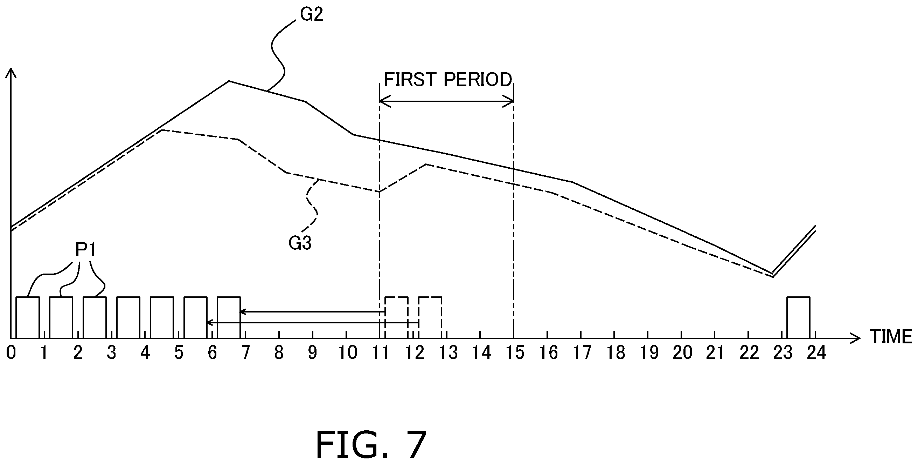

FIG. 7 is a graph indicating setting details of the first operation setting in a case where the DR request relates to the decreasing DR request. As indicated in FIG. 7, with the first operation setting, daytime boiling operation executed from 11:00 to 13:00 with the second operation setting is changed to nighttime boiling operation executed from 5:00 to 7:00 in order to decrease the power consumption of the hot water supply apparatus 100 during the first period in comparison to the second operation setting. In other words, with the first operation setting, the hot water supply apparatus 100 does not execute boiling operation during the first period. FIG. 7 includes solid line indication G2 indicating a hot water reserved quantity in the hot water reservoir tank 21 with the first operation setting, and broken line indication G3 indicating a hot water reserved quantity in the hot water reservoir tank 21 with the second operation setting. The first operation setting is smaller in power consumption of the hot water supply apparatus 100 during the first period than the second operation setting.

### (2-2-1-3) Calculation unit

The calculation unit 493 calculates the first information based on the operation data D1 of the hot water supply apparatus 100 acquired from the hot water supply apparatus 100. The first information includes a difference between first power consumption and second power consumption.

The first power consumption corresponds to power consumption of the hot water supply apparatus 100 in a case where the hot water supply apparatus 100 is controlled with the first operation setting during the first period. After elapse of the first period or the like, the calculation unit 493 calculates the first power consumption with use of a predetermined formula based on the operating frequency of the motor 11a for the compressor 11, the number of revolutions of the boiling pump 24, and the like included in the operation data D1 during the first period.

The second power consumption corresponds to predicted power consumption of the hot water supply apparatus 100 in a case where the hot water supply apparatus 100 is controlled with the second operation setting during the first period. After elapse of the first period or the like, the calculation unit 493 predicts the second power consumption during the first period with use of a predetermined formula based on the operation data D1 during a time zone same as the first period on a day without receipt of the DR request.

In the case where the DR request relates to the increasing DR request, the difference between the first power consumption and the second power consumption is an increased quantity of the power consumption of the hot water supply apparatus 100 during the first period in comparison to the case where the DR request is not received.

In the case where the DR request relates to the decreasing DR request, the difference between the first power consumption and the second power consumption is a decreased quantity of the power consumption of the hot water supply apparatus 100 during the first period in comparison to the case where the DR request is not received.

The first information may further include the predicted second power consumption. The first information may still further include setting details of the first operation setting and whether or not the first operation setting is executed.

### (2-2-1-4) Output unit

The output unit 494 outputs the first information calculated by the calculation unit 493. The output unit 494 according to the present embodiment transmits the first information to the hot water supply apparatus 100 to display (output) the first information on the display unit 130a of the hot water supply apparatus 100. Alternatively, the output unit 494 may transmit the first information to a mobile information terminal such as the smartphone 91 of the user to display the first information on a screen of the mobile information terminal. Still alternatively, the output unit 494 may transmit the first information to the aggregator 90 to output the first information to the aggregator 90.

The output unit 494 further transmits the DR request received by the acquisition unit 491 to the hot water supply apparatus 100 to display the DR request on the display unit 130a of the hot water supply apparatus 100. Alternatively, the output unit 494 may transmit the DR request to a mobile information terminal such as the smartphone 91 of the user to notify the user of the DR request.

### (3) Processing

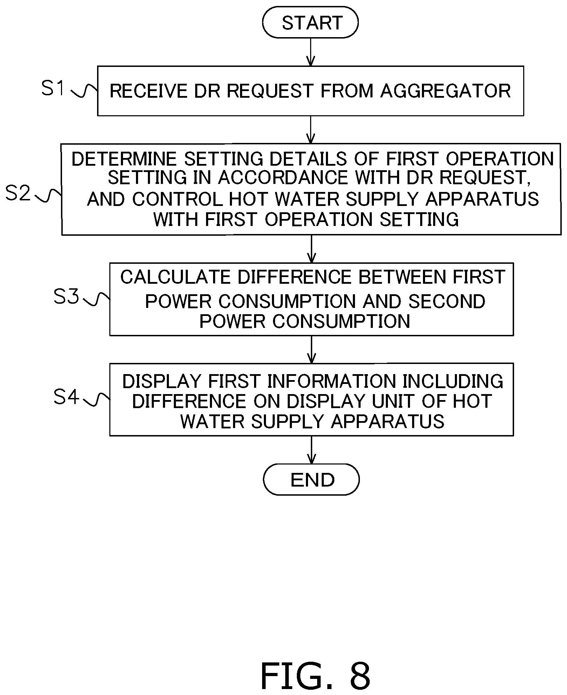

Exemplary processing by the device control system 1 will be described with reference to a flowchart in FIG. 8. As a precondition, the server 200 periodically acquires the operation data D1 from the hot water supply apparatus 100. The server 200 also controls the hot water supply apparatus 100 with the second operation setting.

As in step S1, the server 200 receives the DR request to the hot water supply apparatus 100 from the aggregator 90.

As in step S2 after step S1, the server 200 determines setting details of the first operation setting of the hot water supply apparatus 100 in accordance with the DR request thus received and controls the hot water supply apparatus 100 with the first operation setting.

As in step S3 after step S2, the server 200 calculates the difference between the first power consumption and the second power consumption after elapse of the first period.

As in step S4 after step S3, the server 200 displays the first information including the difference between the first power consumption and the second power consumption on the display unit 130a of the hot water supply apparatus 100.

### (4) Characteristics

### (4-1)

According to a conventionally known system, a user adjusts power consumption in a commercial power grid of a device in accordance with a DR request from an aggregator and receives incentive from the aggregator in accordance with an adjusted quantity.

However, the aggregator or the user cannot find a difference between power consumption of the device according to the DR request and power consumption of the device in a case where the DR request is not received, and thus problematically fails to determine incentive appropriateness.

The device control system 1 according to the present embodiment includes the hot water supply apparatus 100 and the server 200. The server 200 includes the control unit 49. The control unit 49 controls the hot water supply apparatus 100 in accordance with the DR request. The control unit 49 receives the DR request from the aggregator 90. The control unit 49 controls the hot water supply apparatus 100 with the first operation setting during the first period. The first period is set in accordance with the DR request. The first period is provided for adjustment of the power consumption by the hot water supply apparatus 100. The control unit 49 outputs the first information based on the operation data D1 of the hot water supply apparatus 100 acquired from the hot water supply apparatus 100. The first information includes the difference between the first power consumption and the second power consumption. The first power consumption corresponds to power consumption of the hot water supply apparatus 100 in the case where the hot water supply apparatus 100 is controlled with the first operation setting during the first period. The second power consumption corresponds to predicted power consumption of the hot water supply apparatus 100 in the case where the hot water supply apparatus 100 is controlled with the second operation setting during the first period. The second operation setting corresponds to an operation setting for the case where the control unit 49 does not receive the DR request.

In the device control system 1, the control unit 49 outputs the first information based on the operation data D1 of the device acquired from the hot water supply apparatus 100. The first information includes the difference between the first power consumption and the second power consumption. The first power consumption corresponds to power consumption of the hot water supply apparatus 100 in the case where the hot water supply apparatus 100 is controlled with the first operation setting during the first period. The second power consumption corresponds to predicted power consumption of the hot water supply apparatus 100 in the case where the hot water supply apparatus 100 is controlled with the second operation setting during the first period. The second operation setting corresponds to an operation setting for the case where the control unit 49 does not receive the DR request.

The device control system 1 can thus output to the aggregator 90 or the user the difference between the first power consumption of the hot water supply apparatus 100 according to the DR request and the second power consumption of the hot water supply apparatus 100 in the case where the DR request is not received. As a result, the aggregator 90 or the user can find the difference between the first power consumption and the second power consumption to determine incentive appropriateness.

### (4-2)

In the device control system 1 according to the present embodiment, the DR request is the second request. The second request corresponds to a request to decrease the power consumption of the hot water supply apparatus 100 during the first period in comparison to the case where the control unit 49 does not receive the DR request. The first operation setting is smaller in power consumption of the hot water supply apparatus 100 during the first period than the second operation setting. The difference is a decreased quantity of the power consumption of the hot water supply apparatus 100 during the first period in comparison to the case where the control unit 49 does not receive the DR request.

### (4-3)

In the device control system 1 according to the present embodiment, the DR request is the first request. The first request corresponds to a request to increase the power consumption of the hot water supply apparatus 100 during the first period in comparison to the case where the control unit 49 does not receive the DR request. The first operation setting is larger in power consumption of the hot water supply apparatus 100 during the first period than the second operation setting. The difference is an increased quantity of the power consumption of the hot water supply apparatus 100 during the first period in comparison to the case where the control unit 49 does not receive the DR request.

### (4-4)

In the device control system 1 according to the present embodiment, the first information further includes the second power consumption. As a result, the device control system 1 is configured to provide the aggregator 90 or the user with additional information for determination of incentive appropriateness.

### (4-5)

In the device control system 1 according to the present embodiment, the first information still further includes setting details of the first operation setting and whether or not the first operation setting is executed. As a result, the device control system 1 is configured to provide the aggregator 90 or the user with additional information for determination of incentive appropriateness.

### (4-6)

In the device control system 1 according to the present embodiment, the control unit 49 outputs the first information to the aggregator 90.

### (4-7)

The device control system 1 according to the present embodiment further includes the display unit 130a. The control unit 49 outputs the first information to the display unit 130a.

### (5) Modification examples

### (5-1) Modification example 1A

The device control system 1 according to the present embodiment includes the single hot water supply apparatus 100 as a device controlled in accordance with the DR request. The device controlled in accordance with the DR request may alternatively be a device such as an air conditioner other than the hot water supply apparatus 100.

Still alternatively, the device control system 1 may control a plurality of devices in accordance with the DR request. In this case, the control unit 49 determines setting details of the first operation setting for each of the plurality of devices in accordance with the DR request, and outputs the first information.

### (5-2) Modification example 1B

The first period is set as a period in one specific day in the present embodiment. The first period may alternatively be set each day. In this case, the control unit 49 may output the first information each day.

### (5-3) Modification example 1C

With the first operation setting for the case where the DR request relates to the decreasing DR request in the present embodiment, the hot water supply apparatus 100 does not execute boiling operation during the first period. The hot water supply apparatus 100 may alternatively execute boiling operation during the first period with use of excessive electric power generated by a solar power plant. Boiling operation is executed with use of such excessive electric power, so that the hot water supply apparatus 100 does not consume the electric power in the commercial power grid.

The solar power plant is disposed on a roof or the like of a facility equipped with the hot water supply apparatus 100. The solar power plant is connected to the first control device 10 and the second control device 20 so as to be interactively data communicable by wireless communication or wired communication. The hot water supply apparatus 100 and any other electric device used in the facility can operate with use of electric power generated by the solar power plant.

### (5-4) Modification example 1D

With the first operation setting for the case where the DR request relates to the decreasing DR request in the present embodiment, the hot water supply apparatus 100 does not execute boiling operation during the first period. The hot water supply apparatus 100 may alternatively execute boiling operation during a time zone as part of the first period.

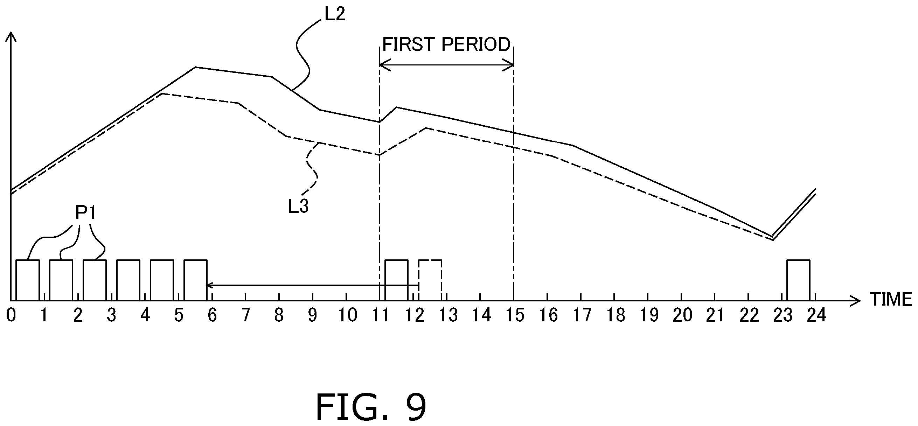

FIG. 9 is a graph indicating setting details of the first operation setting in the case where the DR request relates to the decreasing DR request according to the present modification example. As in FIG. 9, unlike FIG. 7, the hot water supply apparatus 100 executes daytime boiling operation from 11:00 to 12:00. A first operation time (one hour in FIG. 9) as an operation time with the first operation setting during the first period is shorter than a second operation time (two hours in FIG. 9) as an operation time with the second operation setting during the first period. Accordingly, the first operation setting is decreased in power consumption of the hot water supply apparatus 100 during the first period than the second operation setting. In this case, the first information may further include a difference between the first operation time and the second operation time (one hour in FIG. 9).

### (5-5) Modification example 1E

In the case where the DR request relates to the decreasing DR request in the present embodiment, the first operation time as an operation time with the first operation setting during the first period is shorter than the second operation time as an operation time with the second operation setting during the first period.

Alternatively, for example, the first operation time during the first period may be equal to the second operation time during the first period and an operation capacity of boiling operation with the first operation setting during the first period may be lower than an operation capacity of boiling operation with the second operation setting during the first period.

Boiling operation with the first operation setting during the first period is exemplarily set lower in upper limit of the operating frequency of the motor 11a for the compressor 11 than boiling operation with the second operation setting during the first period. Boiling operation with the first operation setting during the first period is exemplarily set lower in hot water output temperature than boiling operation with the second operation setting during the first period.

### (5-6)

The embodiment of the present disclosure has been described above. Various changes to modes and details will be available without departing from the object and the scope of the present disclosure recited in the patent claims.

### REFERENCE SIGNS LIST

- 1: device control system
- 49: control unit
- 90: aggregator
- 100: hot water supply apparatus (device)
- 130a: display unit
- 200: server
- D1: operation data

### CITATION LIST

### PATENT LITERATURE

Patent Literature 1: JP 2018-170925 A

## Claims

1. A device control system (1) comprising:
a single or a plurality of devices (100); and
a server (200) including a control unit (49) configured to control the device in accordance with a demand response request,
wherein the control unit
receives the request from an aggregator (90),
controls the device with a first operation setting during a first period, set in accordance with the request, for adjustment of power consumption by the device, and
outputs first information based on operation data (D1) of the device acquired from the device, the first information including a difference between first power consumption of the device in a case where the device is controlled with the first operation setting during the first period and predicted second power consumption of the device in a case where the device is controlled with a second operation setting during the first period, and the second operation setting being an operation setting for a case where the control unit does not receive the request.

2. The device control system (1) according to claim 1, wherein
the request is a second request to decrease power consumption of the device during the first period in comparison to the case where the control unit does not receive the request,
the first operation setting is smaller in power consumption of the device during the first period than the second operation setting, and
the difference is a decreased quantity of power consumption of the device during the first period in comparison to the case where the control unit does not receive the request.

3. The device control system (1) according to claim 1, wherein
the request is a first request to increase power consumption of the device during the first period in comparison to the case where the control unit does not receive the request,
the first operation setting is larger in power consumption of the device during the first period than the second operation setting, and
the difference is an increased quantity of power consumption of the device during the first period in comparison to the case where the control unit does not receive the request.

4. The device control system (1) according to any one of claims 1 to 3, wherein the first information further includes the second power consumption.

5. The device control system (1) according to any one of claims 1 to 4, wherein the first information further includes setting details of the first operation setting and whether or not the first operation setting is executed.

6. The device control system (1) according to any one of claims 1 to 5, wherein the control unit outputs the first information for each of the plurality of devices.

7. The device control system (1) according to claim 6, wherein the control unit determines setting details of the first operation setting for each of the plurality of devices.

8. The device control system (1) according to any one of claims 1 to 7, wherein
the first period is set each day, and
the control unit outputs the first information each day.

9. The device control system (1) according to any one of claims 1 to 8, wherein
the request is a second request to decrease power consumption of the device in comparison to the case where the control unit does not receive the request, and
a first operation time as an operation time with the first operation setting during the first period is shorter than a second operation time as an operation time with the second operation setting during the first period.

10. The device control system (1) according to claim 9, wherein the first information further includes a difference between the first operation time and the second operation time.

11. The device control system (1) according to any one of claims 1 to 10, wherein
the request is a second request to decrease power consumption of the device in comparison to the case where the control unit does not receive the request, and
an operation capacity of the first operation setting during the first period is lower than an operation capacity of the second operation setting during the first period.

12. The device control system (1) according to any one of claims 1 to 11, wherein the control unit outputs the first information to the aggregator.

13. The device control system (1) according to any one of claims 1 to 12, further comprising a display unit (130a),
wherein the control unit outputs the first information to the display unit.
